# EUROPEAN PATENT SPECIFICATION

(11) **EP 1 105 229 B1**
(45) Date of publication and mention of the grant of the patent: **01.10.2003**
(21) Application number: 99925050.9
(22) Date of filing: 17.05.1999
(51) Int. Cl.: B21D 1/12, G01B 5/00

(54) **EQUIPMENT AND METHOD OF MEASUREMENT IN VEHICLE BODY ALIGNMENT WORK IN VEHICLE BODY MEASUREMENT**
VORRICHTUNG UND VERFAHREN ZUM AUSRICHTEN UND VERMESSEN EINER FAHRZEUGKARROSSERIE
EQUIPEMENT DE MESURE ET PROCEDE D'ALIGNEMENT D'UNE CARROSSERIE DE VEHICULE POUR LA MESURE DE LADITE CARROSSERIE

(30) Priority: 20.05.1998 FI 981125
(43) Date of publication of application: 13.06.2001
(73) Proprietor: AUTOROBOT FINLAND OY, 70150 Kuopio (FI)
(72) Inventor: VENÄLÄINEN, Teuvo, Olavi, FIN-70340 Kuopio (FI)
(74) Representative: Herttuainen, Mauri
(86) International application number: FI9900421
(87) International publication number: WO99059746

(56) References cited:
- FR-A1- 2 703 447
- GB-A- 2 100 681
- US-A- 4 953 306
- US-A- 5 148 377

## Description

The invention relates to a measurement apparatus and method in vehicle body alignment work in measurement of a vehicle body.

The apparatus arrangement in accordance with the invention comprises a device for alignment of a vehicle body, which device includes an alignment table to which a vehicle is attached by means of fastenings. The construction advantageously comprises a lifting gear, by means of which the alignment table can be raised to a desired alignment level. The tools to be coupled with the vehicle, such as pulling ropes or chains, can be connected to the alignment table, preferably by means of straightening booms or equivalent. The apparatus arrangement in accordance with the invention comprises a measurement apparatus that can be fitted around the vehicle to be aligned. The measurement apparatus comprises longitudinal guides on whose support a measurement arch and the measurement units associated therewith can be displaced. Perpendicularly to the centre lines X₁ of the longitudinal guides there is a transverse guide or transverse guides, which can be displaced along the longitudinal guide, having received their control from the longitudinal guide, in order to measure the constructions at the bottom of the vehicle. Said transverse guides also act as structural components interconnecting the longitudinal guides.

For the time of measurement, the vehicle is placed on the alignment table and attached to the table from the fastenings, preferably skirt fastenings or equivalent. Onto the alignment table, the measurement apparatus is fitted so that the longitudinal guides of the measurement apparatus are placed on support of the ends of the transverse beams of the alignment table, which beams are perpendicular to the longitudinal axis (X-axis) of the alignment table.

The transverse guides or beams interconnecting the longitudinal guides operate as guides for the lower measurement units connected with them. The measurement arch, and there can also be several arches, comprises a measurement unit, which can be displaced to different positions in the guides provided on the vertical beam of the measurement arch. The measurement head of the measurement unit can be displaced so that it extends to the vehicle to be aligned, placed in the middle of the measurement arch. The measurement unit of the measurement device comprises an elongated arm, which can be displaced to a desired measurement position, and the measurement value can be read from a display of an electric PC apparatus or manually from reading bars on the guides.

In accordance with the invention, a new type of measurement arrangement has been provided which is based on the use of a measurement unit that comprises a measurement arm to whose end separate arm parts are connected by means of an articulation, a measurement head being connected to the end of said arm parts. The first arm part can be moved with respect to the measurement arm in a horizontal plane and the second arm part can be turned around its longitudinal axis. Moreover, the measurement head can be positioned in different linear positions with respect to the second arm part. Advantageously, the second arm part is also movable to different linear positions with respect to the first arm part. Thus, the measurement head is provided with several different degrees of freedom, and it can also be brought to measurement points inside a vehicle. In accordance with the invention, the first arm part can be pivoted in the articulation with respect to the measurement arm such that it is locked in a given position, for example, with an angular spacing of 45°. A similar arrangement is provided for rotating the second measurement arm. The second measurement arm can be rotated around its axis preferably with a spacing of 90° so that desired locking positions are obtained with a spacing of 90°. Similarly, the measurement head can be positioned in different linear positions and also locked in a desired linear position. Said positions of the arms and of the measurement head are set in advance and they can be programmed directly into the memory of a microprocessor or a computer, thereby allowing the measurement result associated with each combination of the measurement arm positions to be obtained directly from the computer or the microprocessor. In that case, a measurement record can also be printed immediately.

Characteristic features of the measurement apparatus and method in accordance with the invention are set forth in the claims.

The invention will be described in the following with reference to some preferred embodiments of the invention illustrated in the figures of the accompanying drawings, to which embodiments the invention is, however, not intended to be exclusively confined.

Figure 1A is a side view of a device for alignment of a vehicle A.

Figure 1B shows the alignment device shown in Fig. 1A viewed from above.

Figure 2A shows a measurement device comprising a measurement frame fitted on an alignment table. Centring of the measurement device in compliance with the centre line of the vehicle is shown, and, as shown in the figure, support arms in accordance with the invention are fitted between the measurement frame and the vehicle.

Figure 2B shows the apparatus in accordance with the invention viewed from above, four support arms being arranged to be coupled with the vehicle to be aligned.

Figure 2C is a sectional view taken along the line I-I in Fig. 2B.

Figure 2D illustrates the apparatus arrangement shown in Fig. 2C as viewed in the direction of the arrow k₁.

Figure 3A shows a measurement system in accordance with the invention in which a measurement head 64 is connected to a measurement arm 40 through an articulation 41 and arms 42 and 43. The figure illustrates the measurement device arrangement in accordance with the invention.

Figure 3B is a so-called exploded view of the measurement apparatus of the invention connected to the measurement arm.

Figure 3C shows holes situated in an end face 44b of a sleeve 44, a ball/balls being positioned in said holes in locking positions.

Figure 3D is a cross-sectional view of the arm 42. It shows holes situated with an angular spacing of 90°, balls being positioned in said holes in a locking situation.

Figure 4 illustrates measurements carried out by means of the apparatus in accordance with the invention. The measurements are denoted with reference numerals 1, 2 ... and 5.

Figures 5A-5E show on an enlarged scale the measurement points shown by numerals 1-5 in Fig. 4.

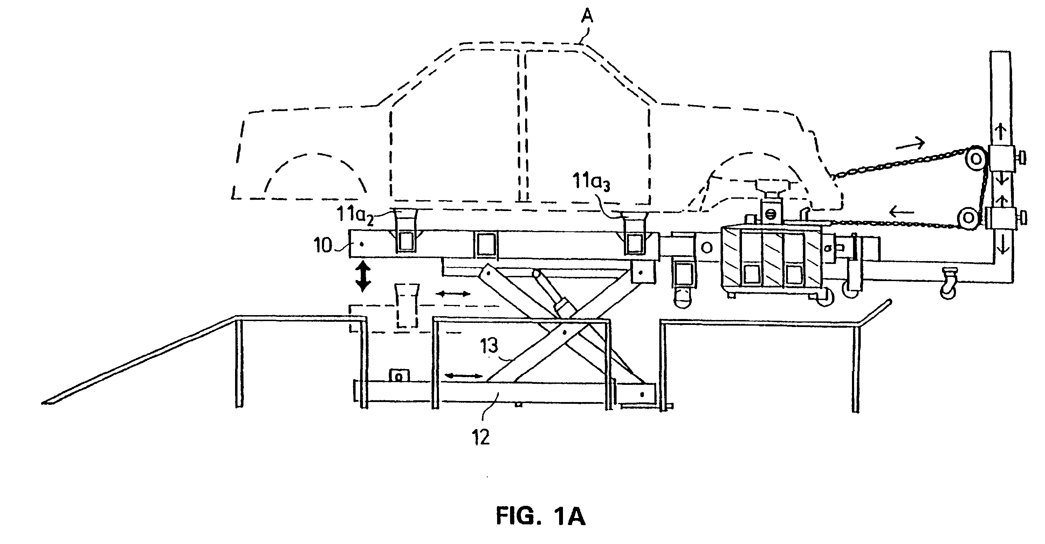

As shown in Fig. 1A, the vehicle alignment device comprises an alignment table 101 shown in the figure, which table can be raised and lowered by means of a scissor jack 13 with respect to a base frame 12. The alignment device comprises transverse beams 11b₁, 11b₂, 11b₃ and 11b₄ provided in its alignment table 10, on which beams fastenings 11a₁,11a₂... have been disposed, so that the vehicle to be aligned can be attached to the alignment table by means of the fastenings.

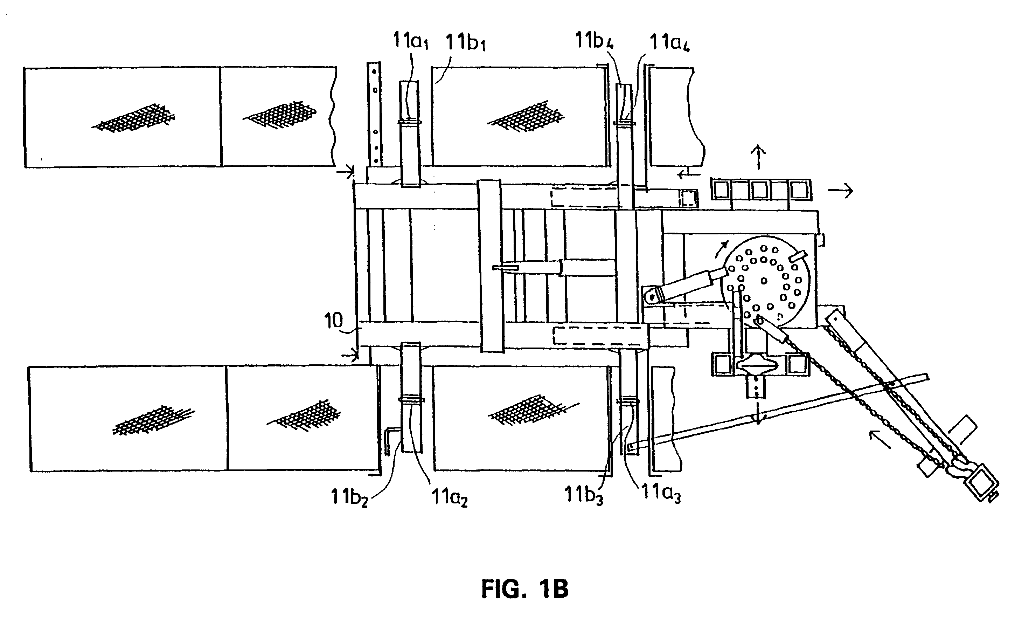

Fig. 1B shows the apparatus arrangement of Fig. 1A viewed from above. The alignment table 10 comprises longitudinal beams and the transverse beams 11b₁, 11b₂, 11b₃ and 11b₄ connected with them. The transverse beams are provided with the fastenings 11a₁,11a₂,11a₃ and 11a₄, from which the vehicle can be attached to the alignment table 10 for the time of alignment of the vehicle. The aligning can be carried out in the figure by means of pulling ropes or chains or similar tools, in which connection the alignment force can be applied, for example, by means of the pulling rope or chain, for example, through a straightening boom connected with the alignment table, to the area to be straightened on the vehicle.

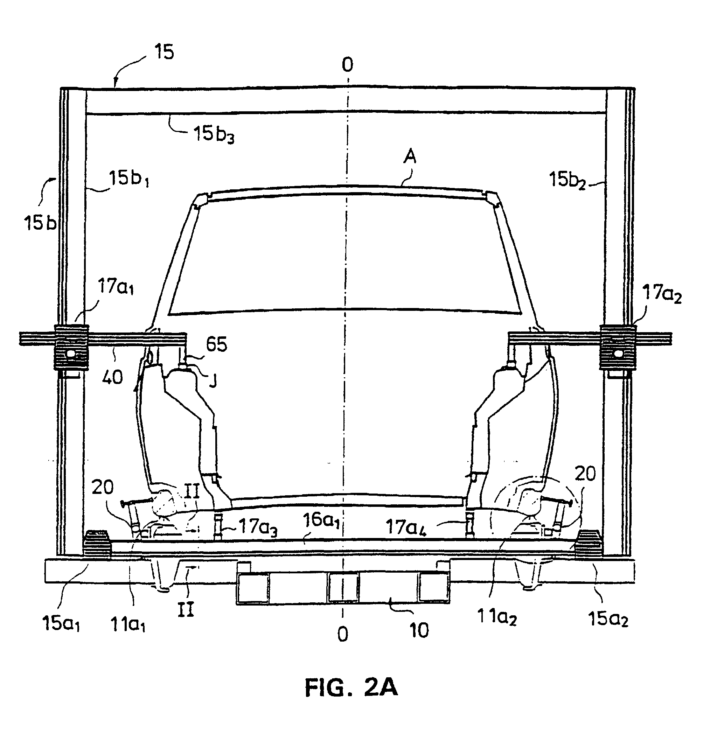

Fig. 2A shows a measurement device 15 as fitted on support of the alignment table 10. The measurement device 15 comprises longitudinal guides 15a₁,15a₂, preferably beam constructions, which are placed horizontally parallel to the longitudinal axis X of the vehicle A. Perpendicularly to the centre lines X₁ of the longitudinal guides, there are transverse guides 16a₁,16a₂..., preferably also beams, on which measurement units 17a₁,17a₂... can be placed.

In connection with the longitudinal guides 15a₁ and 15a₂, a measurement arch 15b (one or more) can be placed, which comprises vertical beams 15b₁ ,15b₂, preferably vertical guides, in which the measurement unit 17a₁, 17a₂ is arranged to be movable in a vertical direction. The measurement unit 17a₁,17a₂ of the measurement device 15 further comprises a measurement arm 40 connected with said unit and displaceable with respect thereto in a horizontal plane, and a measurement head 65 in said arm. The measurement arch 15b comprises a connecting beam 15b₃ that connects the vertical beams, i.e. the vertical guides 15b₁ and 15b₂ from the top. After the measurement apparatus 15 has been centred in compliance with the centre line (O-line) of the vehicle A, the vehicle can be measured at desired points by means of the measurement units 17a₁,17a₂ situated in connection with the measurement arch 15b mounted on the longitudinal guides 15a₁,15a₂ and, similarly, by means of the displaceable measurement units 17a₃,17a₄ provided on the transverse guides.

As shown in Fig. 2A, in accordance with the invention, a device 20 for fastening the measurement apparatus 15, preferably a support arm, is disposed between the vehicle A to be aligned and the measurement apparatus 15. Preferably, there are two fastening devices 20, preferably support arm constructions, on either side of the vehicle A. Favourably, the supporting of the measurement device on the vehicle A is carried out by means of said support arms 20 such that two support arms 20 are supported on one transverse beam or guide 16a₁,16a₂. On each side of the vehicle, one support arm 20 is supported on the vehicle from the transverse beam 16a₁, 16a₂... Preferably, the supporting is carried out such that the support arm is tensioned between the transverse beam 16a₁,16a₂... of the measurement device 15 and the vehicle A to be straightened, which vehicle has been attached to the alignment table 10 at the fastenings 11a₁,11a₂...

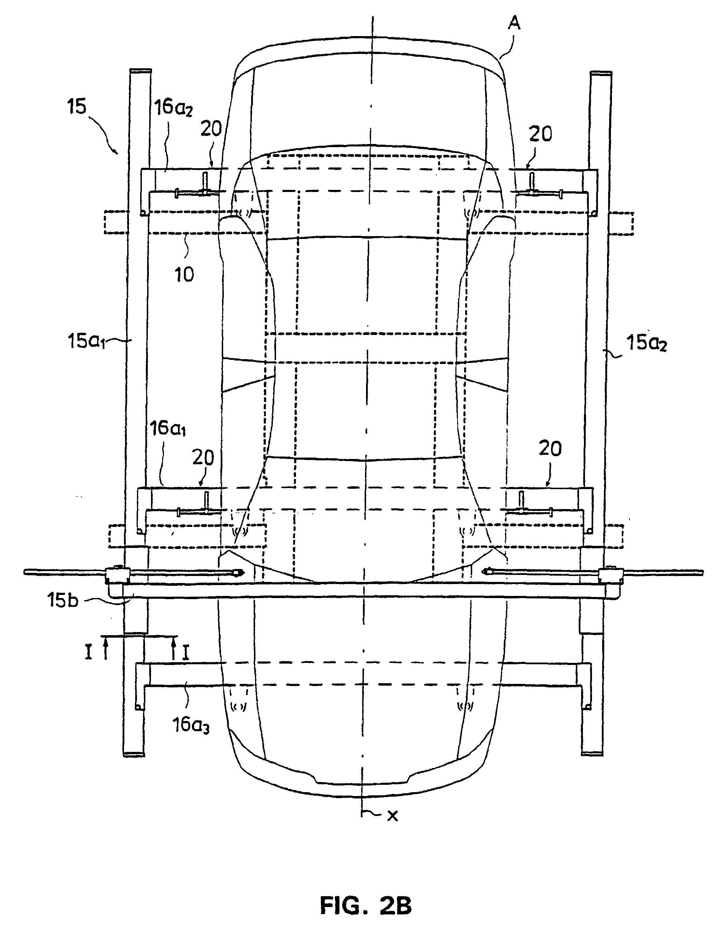

Fig. 2B illustrates the apparatus in accordance with the invention viewed from above. The transverse guides 16a₁ , 16a₂, which comprise the displaceable measurement units 17a₃,17a₄ (in Fig. 2A) placed on them, are disposed between the longitudinal guides 15a₁ and 15a₂. The transverse guides 16a₁ and 16a₂ are guided in the longitudinal guides 15a₁, 15a₂. The measurement arch 15b is also guided in the longitudinal guides 15a₁ and 15a₂. Also, the measurement units 17a₃,17a₄ are guided in the transverse guides 16a₁, 16a₂. As shown in the figure, four fastening devices 20 are arranged to support the measurement frame of the measurement apparatus 15 on the vehicle A. Preferably, between the measurement apparatus 15 and the vehicle, there is a fastening device which comprises a support arm that can be tensioned between the vehicle A and the measurement apparatus 15.

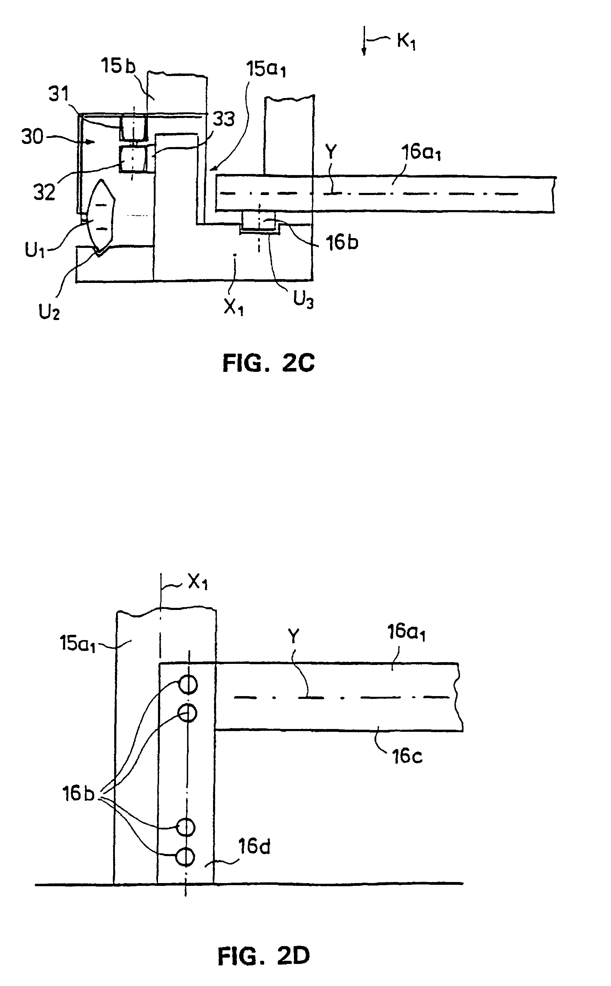

Fig. 2C is a cross-sectional view taken along the line I-I in Fig. 2B at a longitudinal guide and a transverse guide. As shown in Fig. 2C, the transverse guide 16a₁ comprises bearing means 16b which always keep the longitudinal axis y of the transverse guide 16a₁ perpendicular to the longitudinal axes X₁ of the longitudinal guides 15a₁,15a₂. As shown in Fig. 2C, the data on the position of the measurement arch 15b are read by using a detector 30 shown in the figure, which detector comprises a stepping motor 31 and an associated cogged wheel 32, which is in engagement with teeth 33 provided along the length of the longitudinal guide. When the measurement arch 15b has been positioned and calibrated initially in a certain position, the stepping motor 31 indicates the distance of shifting apart from the calibration point through a converter to a PC and further to a display. The measurement arch 15b is mounted by means of a wheel U₁ in a guide groove U₂ in the guide 15a₁. Similarly, the measurement unit 17a₁,17a₂ comprises detector means which indicate the feed-out position of the measurement arm 40 and the height position of the measurement unit 17a₁ in the vertical guide 15b₁,15b₂.

Fig. 2D illustrates the apparatus viewed in the direction of the arrow K₁ in Fig. 2C, i.e. from above. The transverse guide 16a₁,16a₂... comprises a plate part 16d situated at its ends perpendicularly to its bridge beam 16c, which plate part 16d includes a number of bearings 16b, which are fitted in said plate part 16d and arranged to travel along with the plate part in a longitudinal guide groove U₃ in the longitudinal guide 15a₁.

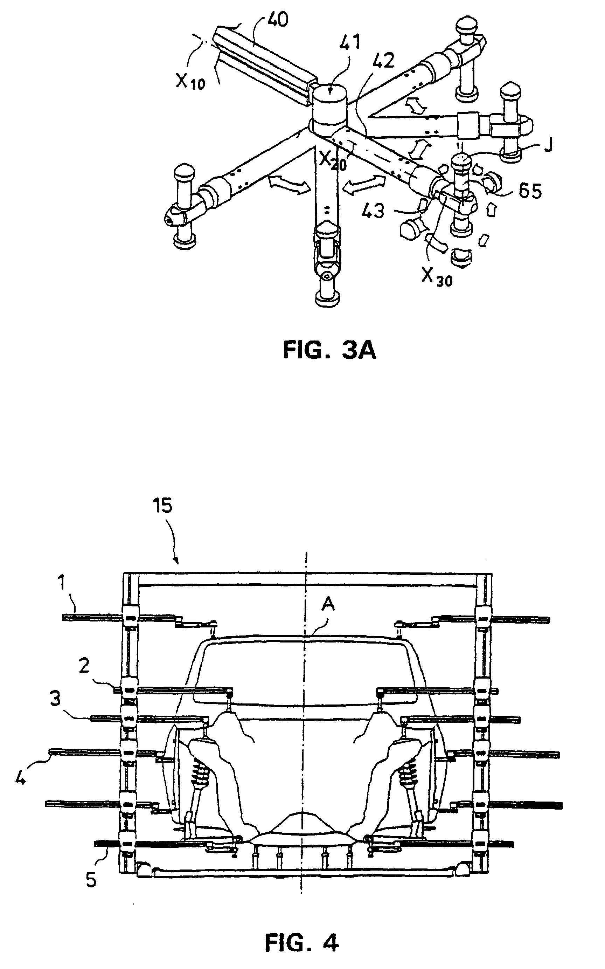

Fig. 3A illustrates the apparatus in accordance with the invention in different positions of a pivotable arm 42. The first arm part 42 is connected to the measurement arm 40 by means of an articulation 41, a second arm part 43 being further connected to said first arm part. A measurement head 64 is connected to the second arm part 43. The measurement head 64 is brought into contact with the point to be measured. As shown in the figure, the arm part 42 can be turned by means of the articulation 41 to different locking positions, advantageously to different locking positions with an angular spacing of 45°. Similarly, the second arm part 43 can be rotated around its longitudinal axis X₃₀ to different angular positions/locking positions. Advantageously, there are such angular/locking positions with an angular spacing of 90°. The arm part 42 is arranged to pivot in a horizontal plane. The measurement arm 40 is moved as shown by the arrow S₁ with respect to the measurement unit 17a₁ which measures the exact feed-out position of the measurement arm 40. The height position of the measurement unit 17a₁ in the vertical guide 15a₁ is also measured by the detector means of the measurement unit 17a₁. Moreover, the vertical guide 15a₁ can be placed in different positions with respect to the longitudinal axis X of the vehicle on the side of the vehicle. Said angular position can be measured separately, as shown in the embodiment of Fig. 2C.

Each part of the mechanism has its own locking position. Thus, when storing in the memory of a computer the positions of the arm part 42 or the second arm part 43 following after it and of the associated measurement head 64, the position of the tip of the measurement head can immediately be calculated by means of a program stored in the memory of the computer. Thus, the measurement result related to a given combination of positions can be read directly from a display of the computer and/or printed from a printer of an output device as a measurement record.

In accordance with the invention, it is also possible to use a device arrangement in which detector means detect, at a given time, the locking position of each part, such as the arm part 42, the second arm part 43 and the measurement head 64, and the data in question are electrically supplied directly into the memory of the computer which indicates a reading of the measurement head corresponding to the combination detected.

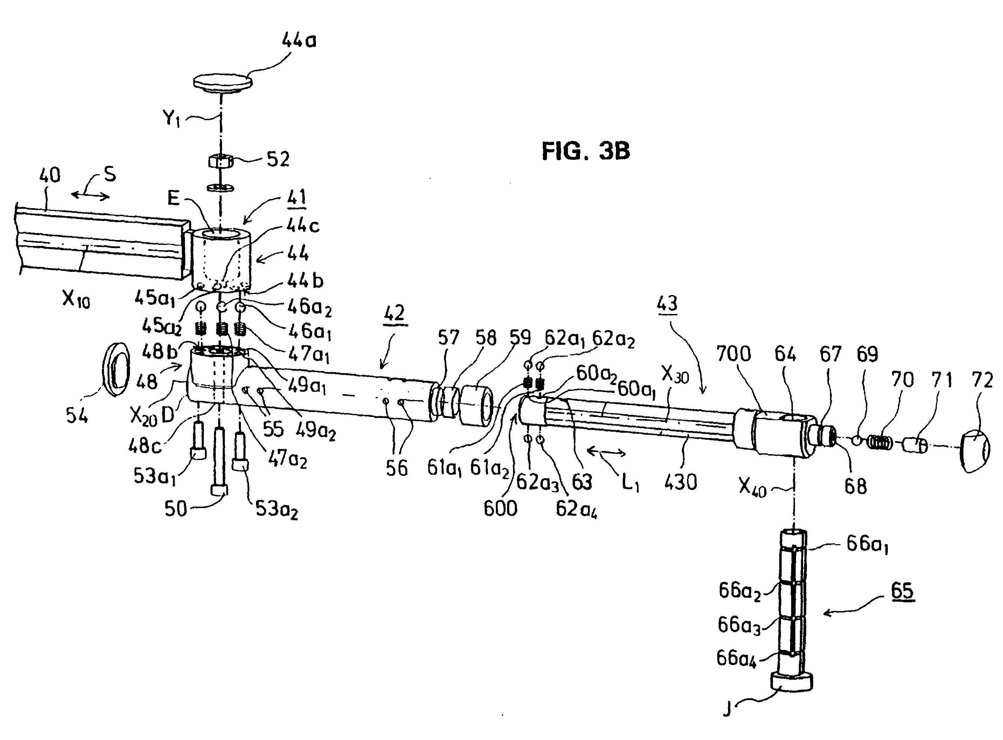

Fig. 3B shows the measurement arm 40 associated with the measurement apparatus in accordance with the invention comprising the articulation 41 at its end. The longitudinal axis of the measurement arm 40 is designated by X₁₀. The arm part 42 is connected to the measurement arm 40 through the articulation 41. The arm part 42 is a hollow structure and includes an inner space D which is closed by a cover 42a at one end. The longitudinal axis of the arm part 42 is designated by X₂₀. The arm part 43 is connected to the first arm part 42. Said second arm part 43 can be turned around its longitudinal axis X₃₀. The measurement head 65 can be passed through a through hole 64 in the second arm part 43. Thus, the tip J, or the reading head, of the measurement head 65 has several degrees of freedom. The measurement head 65 can be displaced linearly in the direction of its longitudinal axis X₄₀, which axis X₄₀ is perpendicular to the axis X₃₀. The geometric longitudinal axis of the through hole 64 is perpendicular to the axis X₃₀. To begin with, the tip J can be raised and lowered in the vertical guides of the measurement arch and moved in the longitudinal or horizontal guides to different positions with respect to the longitudinal axis X of the vehicle. In addition, the measurement arm 40 can be moved in the direction of its longitudinal axis X₁₀ to different positions towards and away from the vehicle. The first arm part 42 can be pivoted with respect to the articulation 41 such that the arm part 42 turns in the horizontal plane to different angular positions. A backing body 48 and the associated arm part 42 can be pivoted around a geometric axis Y₁, which axis Y₁ is perpendicular to the longitudinal axis X₁₀ of the measurement arm 40. Advantageously, there are several angular positions with a spacing of 45°. In addition, the second arm part 43 can also be turned around its longitudinal axis X₃₀ preferably with an angular spacing of 90°. Furthermore, the measurement head 65 can be positioned linearly in the direction of its axis X₄₀ to different positions with respect to the second arm part 43.

The articulation 41 is formed of a sleeve 44 comprising a hollow inner space E. At the end of the sleeve 44 there is a cover 44a which closes the inner space E. On an end face 44b of the sleeve 44 there are situated holes 45a₁,45a₂,45a₃... with a spacing of 45° or another regular number of degrees. Balls 46a₁,46a₂... which are arranged to be pressed by springs 47a₁,47a₂ are situated in holes 49a₁,49a₂... of the backing body 48. Thus, the backing body 48 can be pivoted to a desired angular position with respect to the sleeve 44, which sleeve 44 is firmly attached to the measurement arm 40. A fixing bolt 50 is passed through a hole 48c provided in the pivotable backing body 48 and further through a hole 44c of the sleeve 44, and thus a nut 52 presses the backing body 48 against the end face 44b of the sleeve 44. The balls 46a₁,46a₂... remain between the end face 44b of the sleeve 44 and an end face 48b of the backing body 48. The desired adjustment force for pivoting the backing body 48 is regulated by adjusting the tension of the nut 52 with the screw 50. The angular spacing of the holes 45a₁,45a₂... determines the accuracy of adjustment. Advantageously, the angular spacing of the holes 45a₁,45a₂... is 45°.

Screws 53a₁ and 53a₂ fasten the arm part 42 to the backing body 48. The screws 53a₁ , 53a₂ are passed through the wall of the arm part 42 and their heads are thus situated in the inner space D of the arm part 42. The cover 54 closes the hollow inner space D of the arm part 42.

The first arm part 42 after the articulation 41 comprises first holes 55a₁,55a₁...; 55a₁,55a₂... in pairs, which holes in pairs are preferably provided with an angular spacing of 90°, and the holes have been made through the wall of the first arm part 42. Said first holes 55a₁;55a₁ are situated at the end of the arm part 42 on the side of the articulation 41, and second holes 56a'₁,56a₁; 56a₂',56a₂... in pairs, also with an angular spacing of 90°, are situated at the other end of the arm part 42. The arm part 42 additionally comprises at its end a tapering end thread 57 with a nut 59 placed onto it, a tension sleeve 58 being situated between the nut 59 and the second arm part 43.

As shown in Fig. 3B, the second arm part 43 is placed in the inner space D of the first arm part 42 as shown by the arrow L₁ such that springs 61a₁, 61a₂ and balls 62a₁,62a₂... situated in holes 60a'₁,60a₁ ;60a'₂,60a₂... at the end of the second arm part 42 will be cooperative with the holes 55a'₁,55a₁;55a'₂,55a₂ ... or 56a'₁,56a₁... of the first arm part 42. The springs 61a₁ and 61a₂ and the balls 62a₁,62a₂... are cooperative with the holes 56a'₁,56a₁,56a'₂,56a₂ or with the holes 55a₁,55a₁;55a₂, 55a₂ at either end of the first arm part 42, i.e. the first arm part can be placed by a linear movement L₁ to alternative length positions with respect to the first arm part 42. The balls 62a₁,62a₂... are preferably situated on the opposite sides of the arm 43, in their holes 56a₁,56a₁..., into which the springs 61a₁,61a₂... are placed.

The end of the second arm part 43 advantageously includes an end piece 600, which is a plastic part placed at its shoulder to the end of an arm part 430 proper which is made of metal. By using a plastic part, advantageous bearing properties are imparted to the balls, and there is no need for lubrication. The sleeve 600 is preferably attached by a cotter 63 to said metal portion 430 of the second arm part 43.

An end piece 700 is connected to the metal portion 430 at the other end of the second arm part 43, said end piece 700 comprising a through hole 64 whose centre axis is perpendicular to the longitudinal axis X₃₀ of the second arm part 43 and through which through hole 64 the measurement head 65 is passed. The measurement head 65 comprises grooves 66a1,66a₂... in spaced relationship with one another. Further, the structure comprises an end stub 67 into whose inner hole 68 a ball 69 and a spring 70 are placed. A screw 71 is arranged to press the spring. The force by which the spring 70 presses the ball 69 against one of the grooves 66a₁ or 66a₂... in the measurement head 65 can be regulated by turning the screw 71. By displacing the measurement head 65 in the through hole 64, the measurement head can be brought to alternative positions 66a₁ or 66a₂... A protective cover 72 is provided around the end stub 67. When needed, an extension arm can also be attached to the end stub 67.

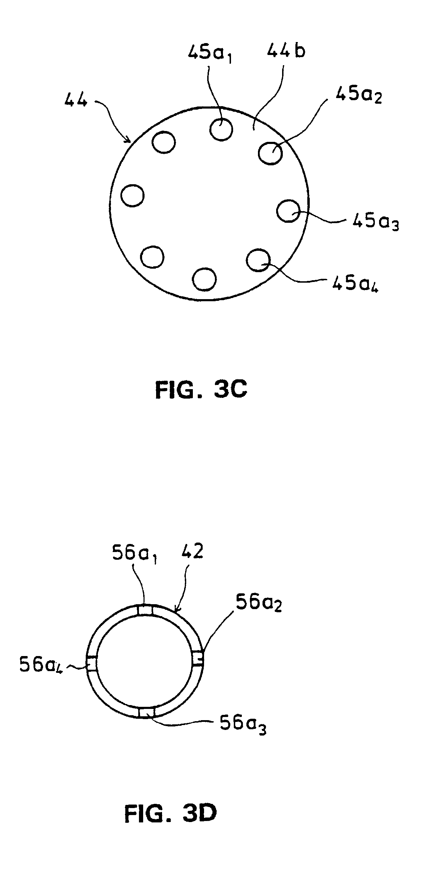

As shown in Fig. 3C, the holes 45a₁,45a₂... are situated with a angular spacing of 45° on the end face 44b of the sleeve 44. The balls 46a₁,46a₂ are positioned in the holes 45a₁,45a₂,45a₃... in a locking situation.

In the arrangement in accordance with the invention, the first arm part 42 can be displaced in a horizontal plane with respect to the measurement arm 40 by means of the articulation 41 to different locking positions which may be provided with a spacing of 45°. Similarly, the second arm part 43 connected to the first arm part 42 can be turned around its longitudinal axis to different angular and locking positions provided, for instance, with a spacing of 90°. Similarly, the measurement head 64 can be positioned linearly in different positions. Said position data can be programmed directly into the memory of a computer, and the precise position of the tip J of the measurement head 65 can be calculated geometrically by means of a program stored in the memory. Thus, when the different positions of the measurement arms 42,43 have been preprogrammed into the memory of the computer, the computer directly shows the measurement result related to said combination of the measurement arm positions on the display of the computer, and/or said measurement result can be printed directly as a measurement record.

In accordance with the invention, the first arm part 42 associated with the articulation 41 and the second arm part 43 connected to the first arm part as well as the measurement head 65 connected to the second arm part can also be provided with electrical means which indicate the positions of the arm parts 42,43 and the measurement head 65 directly to a computer, which stores them in the memory of the computer and further indicates the exact coordinates of the measurement tip J in three-dimensional space. Different position detectors may be used for indicating the data on the position of the measurement head 64 of the arm parts 42 and 43 directly to the computer.

Fig. 3D shows the holes 56a₁,56a₂ of the arm 42 into which the balls 62a₁,62a₂... are pressed by the springs 61a₁,61a₂ in any given locking situation. The holes are provided with an angular spacing of 90°, thereby enabling the arm 43 to have eight different locking positions when turning it around its longitudinal axis X₃₀.

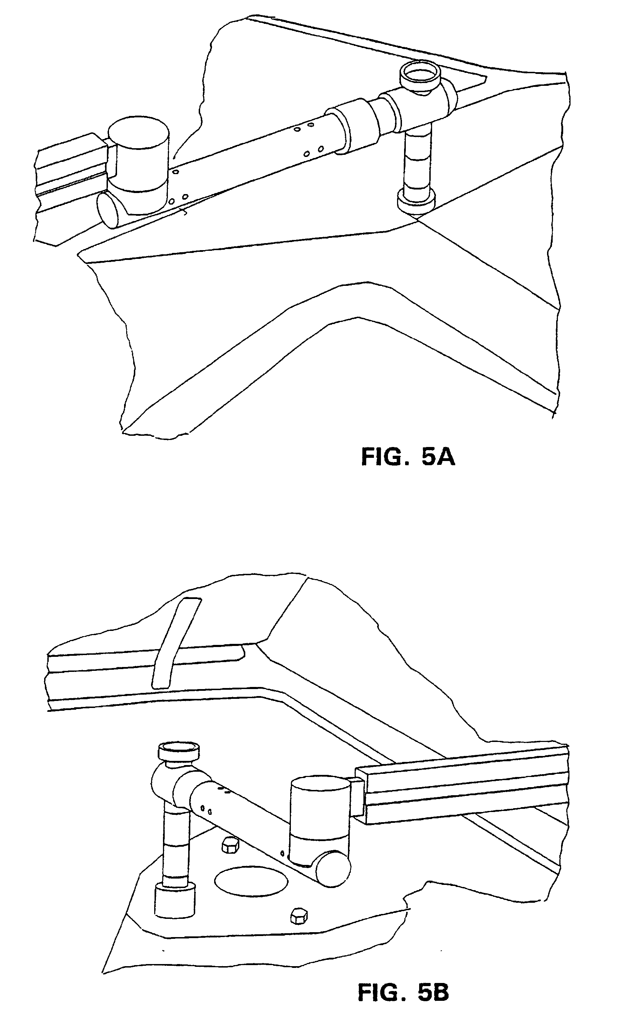

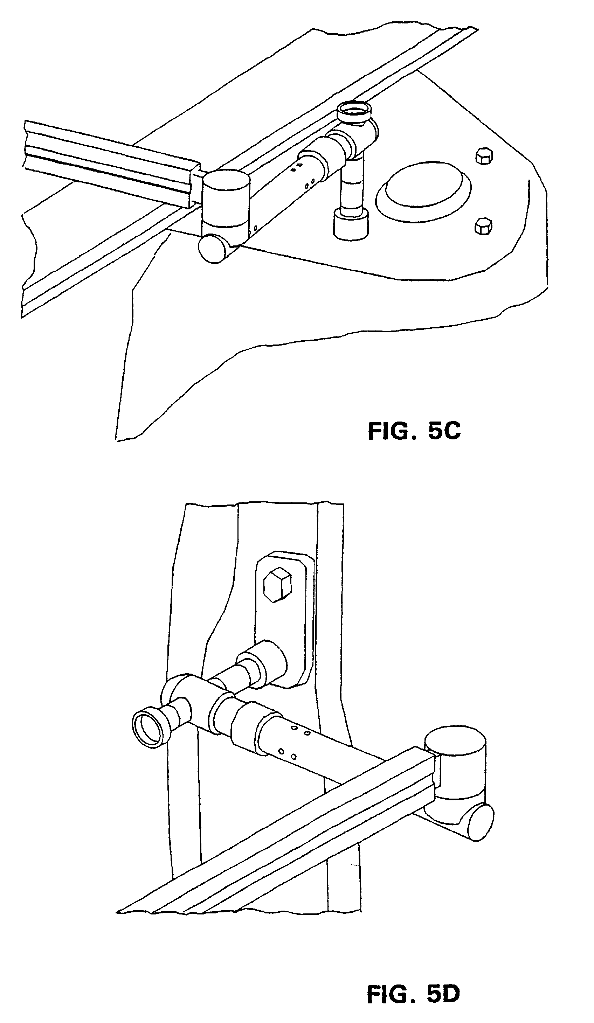

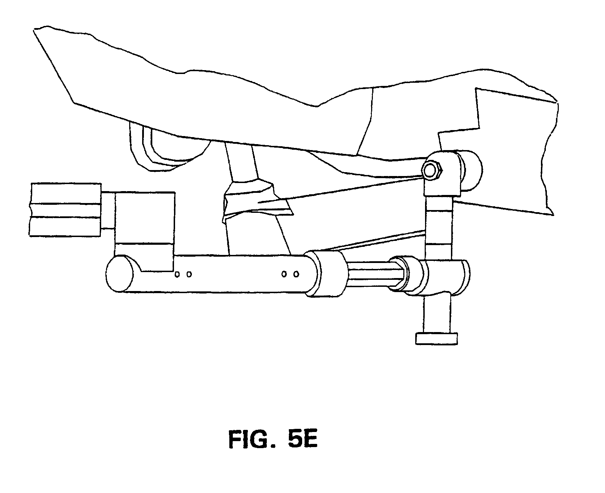

Fig. 4 shows different measurement points of the measurement arm 40 in accordance with the invention in connection with a vehicle to be repaired. The measurement points are denoted with reference numerals 1,2,3,4 and 5 in the figure. Figs. 5A, 5B,5C,5D, and 5E are enlarged views of the corresponding points of the measurement head.

Fig. 5A shows angular measurement of a roof going on to ensure the correct dimensioning of window and door openings. Fig. 5B shows measurement of the attachment points for rear suspension in the interior of a car, which is made possible by the turning measurement head in accordance with the invention. Fig. 5C shows measurement of the upper end of suspension, which is one of the most important measurement points. Fig. 5D shows measurement of a vertical pillar, which often also includes measurement of the locations of bolts for fastening rear doors.

Fig. 5E shows measurement of the location of a bolt for fastening a lower support arm which affects the driving characteristics.

## Claims

1. A measurement apparatus for vehicle body alignment work, which measurement apparatus can be placed in connection with an alignment table (10) to whose fastenings (11a₁ 11a₂,11a₃, 11a₄) the vehicle is attached for the time of the alignment work, and a measurement unit (17a₁,17a₂) of which measurement apparatus (15) can be moved in a vertical guide (15b₁,15b₂), which vertical guide (15b₁,15b₂) can further be moved in a longitudinal guide (15a₁,15a₂), and which measurement unit (17a₁) can be provided with a movable measurement arm (40), **characterized in that** the measurement arm (40) comprises an articulation (41) to which a first arm part (42) is connected such that the arm part (42) can be pivoted on support of the articulation (41) with respect to the measurement arm (40), and that to the arm part (42) is connected a second arm part (43) which can be turned around its longitudinal axis (X₃₀), to which second arm part (43) a measurement head (65) is connected either directly or through an intermediate part.

2. A measurement apparatus for vehicle body alignment work as claimed in claim 1, **characterized in that** a second structure formed by the arm parts (42,43) can be extended in the direction of the longitudinal axis (X₂₀) of the arm part (42) such that the second arm part (43) can be displaced with respect to the first arm part (42) to different length positions.

3. A measurement apparatus as claimed in any one of the preceding claims, **characterized in that** the second arm part (43) comprises at its end a through hole (64) through which the measurement head (65) is passed perpendicularly to the longitudinal axis (X₃₀) of the second arm part.

4. A measurement apparatus as claimed in any one of the preceding claims, **characterized in that** the articulation (41) at the end of the measurement arm (40) comprises a sleeve part (44), a backing body (48) being pivotable with respect to the sleeve part (44) to alternative angular positions such that the backing body (48) comprises at its end face (48b) holes (49a₁,49a₂...), and that the sleeve (44) placed against it comprises at its end face (44b) holes (45a₁,45a₂,45a₃), into which balls (46a₁,46a₂...) are positioned in locking positions, and that the balls (46a₁ ,46a₂) and springs (47a₁,47a₂) pressing the balls are placed into the holes (49a₁,49a₂...) of the backing body (48), the backing body (48) being pivotable to a desired angular position/locking position according to the spacing determined by the angular distance between the holes, and that the arm part (42) associated with the backing body (48) can be turned in a horizontal plane with respect to the measurement arm (40).

5. A measurement apparatus as claimed in any one of the preceding claims, **characterized in that** the first arm part (42) comprises at its both ends holes (55a'₁, 55a₁; 55a'₂,55a₂... 56a'₁,56a₁ ;56a'₂,56a₂ ...), in which connection springs (61a₁, 61a₂...) and balls (62a_{1,}62a₂) situated in holes (60a'₁,60a₁;60a'₂,60a₂) of the second arm part (43) can be brought alternatively either into the holes (55a'₁,55a₁...) of one end of the arm part (42) or into the holes (56a'₁,56a₁...) of the other end thereof, in which connection the balls (62a₁,62a₂...) can be turned through a desired angular spacing and they will be positioned alternatively in the holes (55a'₁,55a₁... or 56a'₁,56a₁...) of the first arm part (42) in locking positions.

6. A measurement apparatus as claimed in any one of the preceding claims, **characterized in that** the second arm part (43) comprises an end piece (700) and therein a through hole (64) for the measurement head (65), and that the measurement head (65) comprises grooves (66a₁,66a₂), in which connection the measurement head (65) can be placed in alternative positions, the end piece (700) comprising an end stub (67) into whose inner hole (68) a ball (69) and a spring (70) are placed, a screw (71) pressing the ball (69) into one of the grooves (66a₁ or 66a₂...) defined by the locking position of the measurement head (65).

7. A measurement apparatus as claimed in any one of the preceding claims, **characterized in that** the second arm part (43) comprises an end sleeve (600) at the end on the side of the first arm part (42), which end sleeve is attached by means of a cotter (63) to a metal portion (430) of the second arm part (43), and that the holes (60a₁, 60a₁',60a₂,60a'₂) have been made into the end sleeve (600) made of plastic, thereby enabling good bearing properties for the balls (62a₁,62a₁...).

8. A measurement apparatus as claimed in any one of the preceding claims, **characterized in that** the fast arm part (42) comprises end threads (57) at its end, onto which threads a nut (59) can be mounted, so that by means of a tension sleeve (58) situated between the nut (59) and the arm part (43) the arm part (43) can be locked to different positions with respect to the first arm part (42), the tension sleeve (58) being split in a longitudinal direction, thereby serving as a tension washer when the nut (50) tightens it against the arm part (43), the thread (57) being a taper thread.

9. A method in vehicle body alignment work in measurement of a vehicle body, which method employs a measurement apparatus (15) which is connected to an alignment table and which comprises guides (15a₁,15a₂) extending parallel to the longitudinal axis (X) of the vehicle as well as vertical guides (15b₁,15b₂), the vertical guides (15b₁,15b₂) moving in the longitudinal guides (15a₁,15a₂) and comprising a measurement unit (17a₁,17a₂) which can be moved in the vertical guides (15b₁,15b₂), and that the measurement unit (17a₁ , 17a₂) is provided with a movable measurement arm (40) which can be moved in a horizontal direction with respect to the measurement unit (17a₁), **characterized in that** the measurement apparatus used is such that it comprises at the end of the measurement arm (40) a movable first arm part (42) which moves in a horizontal plane, and that a second arm part (43) is connected to said arm part (42) which can be moved and positioned in a horizontal plane, said second arm part (43) being rotatable around its longitudinal axis (X₃₀), and that a measurement head (64) is connected to the second arm part (43), whereby, by using the arrangement in accordance with the invention, the measurement locations situated inside the vehicle body (A) can also be measured by the same measurement head (64).

10. A method as claimed in claim 9, **characterized in that**, in the method, the combination of locking positions of each arm part (42,43) and the measurement head (64) connected to the measurement arm (40) is read and fed into the memory of a computer or said combination is detected electrically by using position detectors which indicate the pivot position of the arm part (42), the rotation position of the second arm part (43) connected to the first arm part (42) and the linear position of the measurement head (64) connected to the second arm part (43), and that, based on said data fed or directly electrically detected, the result of measurement is directly indicated on the display of the computer or equivalent and/or said measurement result is printed as a measurement record.

## Patentansprüche

1. Meßvorrichtung zur Ausrichtarbeit einer Fahrzeugkarosserie, wobei die Meßvorrichtung in Verbindung mit einem Ausrichttisch (10) angeordnet sein kann, an dessen Befestigungselementen (11a_{1,} 11a₂, 11a_{3,} 11a₄) das Fahrzeug während des Zeitraumes der Ausrichtarbeit angebracht ist, und eine Meßeinheit (17a_{1,} 17a₂), durch die die Meßvorrichtung (15) in einer vertikalen Führung (15b₁, 15b₂) bewegt werden kann, wobei die vertikale Führung (15b₁, 15b₂) außerdem in einer Längsführung (15a₁, 15a₂) bewegt werden kann, und die Meßeinheit (17a_{1,} 17a₂) mit einem beweglichen Meßarm (40) ausgestattet sein kann, **dadurch gekennzeichnet dass** der Meßarm (40) ein Gelenk (41) aufweist, an das ein erstes Armteil (42) so angeschlossen ist, dass das Armteil (42) mit Bezug auf den Meßarm (40) auf der Lagerung des Gelenkes (41) gedreht werden kann, und dass ein zweites Armteil (43) mit dem Armteil (42) verbunden ist, das um seine Längsachse (X₃₀) gedreht werden kann, und ein Meßkopf (65) entweder direkt oder durch ein Zwischenteil mit dem zweiten Armteil (43) verbunden ist.

2. Meßvorrichtung zum Ausrichten einer Fahrzeugkarosserie gemäß Anspruch 1, **dadurch gekennzeichnet, dass** eine zweite durch die Armteile (42, 43) gebildete Konstruktion in Richtung der Längsachse (X₂₀) des Armteils (42) so ausgezogen werden kann, dass das zweite Armteil (43) mit Bezug auf das erste Armteil (42) auf unterschiedliche Längsstellungen verstellt werden kann.

3. Meßvorrichtung gemäß jedem der vorangehenden Ansprüche, **dadurch gekennzeichnet dass** das zweite Armteil (43) an seinem Ende ein Durchgangsloch (64) aufweist, durch das der Meßkopf (65) rechtwinklig zu der Längsachse (X₃₀) des zweiten Armteiles durchtritt.

4. Meßvorrichtung gemäß jedem der vorangehenden Ansprüche, **dadurch gekennzeichnet dass** das Gelenk (41) bei dem Ende des Meßarmes (40) ein Buchsenteil (44) aufweist, einen Stützkörper (48), der mit Bezug auf das Buchsenteil (44) drehbar in verschiedene winklige Stellungen ist, so dass das Stützteil (48) an seiner Endfläche (48b) Löcher (49a₁, 49a₂ ...) aufweist, und dass die dagegen angeordnete Buchse (44) an ihrer Endfläche (44b) Löcher (45a₁, 45a₂, 45a₃) aufweist, in denen Kugeln (46a₁, 46a₂ ...) in Sperrpositionen angeordnet sind, und dass die Kugeln (46a₁, 46a₂) und Federn (47a₁, 47a₂) die die in den Löchern angeordneten Kugeln (49a₁, 49a₂ ...) des Stützkörpers (48) drücken, wobei der Stützkörper (48) in eine gewünschte winklige Stellung / Sperrstellung entsprechend dem durch den winkligen Abstand zwischen den Löchern bestimmten Abstand drehbar ist, und dass der Arm (42) der auf den Stützkörper (48) bezogen ist, in einer horizontalen Ebene mit Bezug auf den Meßarm (40) gedreht werden kann.

5. Meßvorrichtung gemäß jedem der vorangehenden Ansprüche, **dadurch gekennzeichnet dass** das erste Armteil (42) an seinen beiden Enden Löcher (55a₁, 55a'₁; 55a'₂, 55a₂ . . .56a'₁, 56a₁; 56a'₂, 56a₂ ...) aufweist, in denen Verbindungsfedern (61a₁, 61a₂ ...) und Kugeln (62a₁, 62a₂), angeordnet in den Löchern (60a'₁, 60a₁; 60a'₂, 60a₂) des zweiten Armteiles (43), wahlweise entweder in die Löcher (55a'₁, 55a₁ ...) des einen Endes des Armteils (42) oder in die Löcher (56a'₁, 56a₁ ...) dessen anderen Endes gebracht werden können, wobei bei der Verbindung die Kugeln (62a₁, 62a₂ ...) um einen gewünschten winkligen Zwischenraum gedreht werden können und sie wahlweise in den Löchern (55a'₁, 55a₁ ... oder 56a'₁, 56a₁ ...) des ersten Armteiles (42) in Sperrpositionen positioniert werden.

6. Meßvorrichtung gemäß jedem der vorangehenden Ansprüche, **dadurch gekennzeichnet dass** das zweite Armteil (43) ein Endstück (700) aufweist und darin ein Durchgangsloch (64) für den Meßkopf (65) ist, und der Meßkopf (65) Nuten (66a₁, 66a₂) aufweist, in denen die Verbindung des Meßkopfes (65) in verschiedenen Stellungen angeordnet sein kann, wobei das Endstück (700) ein Endanschlußstück (67) aufweist, in dessen innerem Loch (68) eine Kugel (69) und eine Feder (70) angeordnet sind, wobei eine Schraube (71) die Kugel (69) in eine der durch die Sperrstellung des Meßkopfes (65) definierten Nuten (66a₁ oder 66a₂...) drückt.

7. Meßvorrichtung gemäß jedem der vorangehenden Ansprüche, **dadurch gekennzeichnet dass** das zweite Armteil (43) eine Buchse (600) an dem Ende der Seite des ersten Armteils (42) aufweist, wobei die Endbuchse mittels eines Keils (63) an einem Metallabschnitt (430) des zweiten Armteils (43) angebracht ist, und dass die Löcher (60a'₁, 60a₁; 60a'₂, 60a₂) in der aus Kunststoff hergestellten Endbuchse (600) hergestellt wurden, dadurch werden gute Lagerverhältnisse für die Kugeln (62a₁, 62a'₁...) ermöglicht.

8. Meßvorrichtung gemäß jedem der vorangehenden Ansprüche, **dadurch gekennzeichnet dass** das erste Armteil (42) an seinem Ende ein Endgewinde (57) aufweist, auf dem eine Mutter (59) befestigt werden kann, so dass durch eine zwischen der Mutter (59) und dem Armteil (43) angeordnete Spannungsbuchse (58) das Armteil (43) bei verschiedenen Stellungen mit Bezug auf das erste Armteil (42) gesperrt werden kann, wobei die Spannungsbuchse (58) in einer Längsrichtung geteilt ist, und dabei als Spannungsscheibe dient, wenn die Mutter (50) sie gegen das Armteil (43) befestigt, und das Gewinde (57) ein Kegelgewinde ist.

9. Verfahren der Ausrichtarbeit einer Fahrzeugkarosserie zum Vermessen einer Fahrzeugkarosserie, wobei das Verfahren eine Meßvorrichtung (15) einsetzt, die mit einem Ausrichttisch verbunden ist und Führungen (15a₁, 15a₂) aufweist, die sich parallel zu der Längsachse (X) des Fahrzeuges erstrecken, und ebenfalls vertikale Führungen (15b₁, 15b₂), wobei sich die vertikalen Führungen (15b₁, 15b₂) in den Längsführungen (15a₁, 15a₂) bewegen und eine Meßeinheit (17a₁, 17a₂) aufweisen, die in den vertikalen Führungen (15b₁, 15b₂) bewegt werden kann, und dass die Meßeinheit (17a_{1,} 17a₂) mit einem beweglichen Meßarm (40) versehen ist, der in einer horizontalen Richtung mit Bezug auf die Meßeinheit (17a₁) bewegt werden kann, **dadurch gekennzeichnet dass** die verwendete Meßvorrichtung so beschaffen ist, dass sie an dem Ende eines Meßarmes (40) ein bewegliches erstes Armteil (42) aufweist, das sich in einer horizontalen Ebene bewegt, und ein zweites Armteil (43) mit dem Armteil (42) verbunden ist, das in einer horizontalen Ebene bewegt und positioniert werden kann, wobei das zweite Armteil (43) um seine Längsachse (X₃₀) drehbar ist, und ein Meßkopf (64) mit dem zweiten Armteil (43) verbunden ist, wobei bei der Verwendung der Anordnung gemäß der Erfindung die innerhalb der Fahrzeugkarosserie (A) angeordneten Meßpunkte ebenfalls mit dem gleichen Meßkopf (64) gemessen werden können.

10. Verfahren gemäß Anspruch 9, **dadurch gekennzeichnet dass** bei dem Verfahren die Kombination der Sperrpositionen von jedem Armteil (42, 43) und dem Meßkopf (64), verbunden mit dem Meßarm (40) gelesen und in den Speicher eines Computers eingegeben wird, oder dass die Kombination elektronisch ermittelt wird, wobei Positionsdetektoren verwendet werden, die die Drehstellung des Armteiles (42) anzeigen, die Drehstellung des mit dem ersten Armteil (42) verbundenen zweiten Armteiles (43) und die lineare Position des mit dem zweiten Armteil (43) verbundenen Meßkopfes (64), und ausgehend von den eingegebenen oder direkt elektronisch ermittelten Daten das Ergebnis der Messung direkt auf dem Schirm des Computers oder ähnlichem angezeigt wird, und / oder das Meßergebnis als Meßprotokoll gedruckt wird.

## Revendications

1. Appareil de mesure pour une opération d'alignement de la carrosserie d'un véhicule, lequel appareil de mesure peut être disposé en liaison avec une table d'alignement (10), aux éléments de fixation (11a₁, 11a₂, 11a₃, 11a₄) de laquelle le véhicule est attaché pendant la durée de l'opération d'alignement, et une unité de mesure (17a₁, 17a₂) duquel appareil de mesure (15) peut être déplacée dans un guide vertical (15b₁, 15b₂), lequel guide vertical (15b₁, 15b₂) peut en outre être déplacé dans un guide longitudinal (15a₁, 15a₂) et laquelle unité de mesure (17a₁) peut être pourvue d'un bras mobile de mesure (40), **caractérisé en ce que** le bras de mesure (40) comprend une articulation (41), à laquelle une première partie (42) du bras est raccordée de telle sorte que la partie (42) du bras peut être pivotée sur le support de l'articulation (41) par rapport au bras de mesure (40), et **en ce que** la partie (42) du bras est raccordée à une seconde partie (43) du bras, qui peut être tournée autour de son axe longitudinal (X₃₀), à laquelle seconde partie (43) du bras une tête de mesure (65) est raccordée directement ou au moyen d'une partie intermédiaire.

2. Appareil de mesure pour une opération d'alignement de carrosserie de véhicule selon la revendication 1, **caractérisé en ce que** une seconde structure formée par les parties (42, 43) du bras peut être étendue dans la direction de l'axe longitudinal (X₂₀) de la partie (42) du bras de telle sorte que la seconde partie (43) du bras peut être déplacée par rapport à la première partie (42) du bras à des positions de différentes longueurs.

3. Appareil de mesure selon l'une quelconque des revendications précédentes, **caractérisé en ce que** la seconde partie (43) du bras comprend, à son extrémité, un trou traversant (64), par lequel la tête de mesure (65) est passée perpendiculairement à l'axe longitudinal (X₃₀) de la seconde partie du bras.

4. Appareil de mesure selon l'une quelconque des revendications précédentes, **caractérisé en ce que** l'articulation (41) à l'extrémité du bras de mesure (40) comprend une partie en forme de manchon (44), un corps de support (48) étant pivotable par rapport à la partie en forme de manchon (44) à d'autres positions angulaires de telle sorte que le corps de support (48) comprend, dans sa face d'extrémité (48b) , des trous (49a₁, 49a₂ ...) et que le manchon (44), placé contre cette face d'extrémité comprend, dans sa face d'extrémité (44b), des trous (45a₁, 45a₂, 45a₃) , dans lesquels des billes (46a₁, 46a₂, ...) sont positionnées dans des positions de blocage, et que les billes (46a₁,46a₂) et des ressorts (47a₁, 47a₂) , pressant les billes, sont placés dans les trous (49a₁, 49a₂ ...) du corps de support (48), le corps de support (48) étant pivotable pour venir dans une position angulaire / position de blocage désirée conformément à l'espacement déterminé par l'espace angulaire entre les trous, et que la partie (42) du bras, associée au corps de support (48), peut être tournée dans un plan horizontal par rapport au bras de mesure (40) .

5. Appareil de mesure selon l'une quelconque des revendications précédentes, **caractérisé en ce que** la première partie (42) du bras comprend, au niveau de ses deux extrémités, des trous (55a₁', 55a₁; 55a₂', 55a₂ ... 56a₁', 56a₁; 56a₂', 56a₂ ...), dans lesquels des ressorts de liaison (61a₁, 61a₂ ...) et des billes (62a₁, 62a₂) situées dans des trous (60a₁', 60a₁; 60a₂', 60a₂) de la seconde partie (43) du bras peuvent être amenées alternativement soit dans les trous (55a₁', 55a₁ ...) d'une extrémité de la partie (42) du bras, soit dans les trous (56a₁', 56a₁ ...) de son autre extrémité, et en rapport avec lesquels les billes (62a₁, 62a₂ ...) peuvent être tournées selon un espacement angulaire désiré et seront positionnées alternativement dans les trous (55a₁', 55a₁ ... ou 56a₁', 56a₁ ...) de la première partie (42) du bras dans des positions de blocage.

6. Appareil de mesure selon l'une quelconque des revendications précédentes, **caractérisé en ce que** la seconde partie (43) du bras comprend une pièce d'extrémité (700), et dans cette dernière, un trou traversant (64) pour la tête de mesure (65), et que la tête de mesure (65) comprend des rainures (66a₁, 66a₂), en rapport avec lesquelles la tête de mesure (65) peut être placée dans des positions différentes, la pièce d'extrémité (700) comprenant un embout d'extrémité (67), dans un trou intérieur (68) duquel sont disposés une bille (69) et un ressort (70), une vis (71) pressant la bille (69) dans l'une des rainures (66a₁ ou 66a₂ ...) définies par la position de blocage de la tête de mesure (65).

7. Appareil de mesure selon l'une quelconque des revendications précédentes, **caractérisé en ce que** la seconde partie (43) du bras comprend un manchon d'extrémité (600) au niveau de l'extrémité du côté de la première partie (42) du bras, lequel manchon d'extrémité-est fixé au moyen d'une goupille (63) à une portion métallique (430) de la seconde partie (43) du bras et que les trous (60a₁, 60a₁', 60a₂, 60a₂') ont été aménagés dans le manchon d'extrémité (600) formé d'une matière plastique, ce qui fournit de bonnes propriétés de support pour les billes (62a₁, 62a₁' ...).

8. Appareil de mesure selon l'une quelconque des revendications précédentes, **caractérisé en ce que** la première partie (42) du bras comprend, à son extrémité, un filetage d'extrémité (57), sur lequel filetage peut être monté un écrou (59), de sorte qu'à l'aide d'un manchon de tension (58) situé entre l'écrou (59) et la partie (43) du bras, la partie (43) du bras peut être bloquée dans différentes positions par rapport à la première partie (42) du bras, le manchon de tension (58) étant divisé dans une direction longitudinale, servant ainsi de rondelle de tension lorsque l'écrou (50) est serré contre la partie (43) du bras, le filetage (57) étant un filetage conique.

9. Procédé d'opération d'alignement de carrosserie de véhicule dans la mesure d'une carrosserie de véhicule, lequel procédé utilisé un appareil de mesure (15) qui est raccordé à une table d'alignement et qui comprend des guides (15a₁, 15a₂) qui s'étendent parallèlement à l'axe longitudinal (X) du véhicule, ainsi que des guides verticaux (15b₁, 15b₂), les guides verticaux (15b₁, 15b₂) se déplaçant dans les guides longitudinaux (15a₁, 15a₂) et comprenant une unité de mesure (17a₁, 17a₂) qui peut être déplacée dans les guides verticaux (15b₁, 15b₂) et que l'unité de mesure (17a₁, 17a₂) est équipée d'un bras mobile de mesure (40) qui peut être déplacé dans une direction horizontale par rapport à l'unité de mesure (17a₁), **caractérisé en ce que** l'appareil de mesure utilisé est tel qu'il comprend, à l'extrémité du bras de mesure (40), une première partie mobile du bras (42), qui se déplace dans un plan horizontal, et qu'une seconde partie (43) du bras est raccordée à ladite partie (42) du bras qui peut être déplacée et positionnée dans un plan horizontal, ladite seconde partie (43) du bras pouvant être tournée autour de son axe longitudinal (X₃₀) et que la tête de mesure (64) est raccordée à la seconde partie (43) du bras, ce qui a pour effet que moyennant l'utilisation de l'agencement selon l'invention, les emplacements de mesure situés à l'intérieur de la carrosserie (A) du véhicule peuvent être également mesurés au moyen de la même tête de mesure (64).

10. Procédé selon la revendication 9, **caractérisé en ce que** dans le, procédé la combinaison de positions de blocage de chaque partie (42, 43) du bras et de la tête de mesure (64) raccordée au bras de mesure (40) est lue et introduite dans la mémoire d'un ordinateur, ou -ladite combinaison est détectée électriquement moyennant l'utilisation de détecteurs de position qui indiquent la position de pivotement de la partie (42) du bras, la position de rotation de la seconde partie (43) du bras raccordée à la première partie (42) du bras et la position linéaire de la tête de mesure (64) raccordée à la seconde partie (43) du bras et que, sur la base desdites données introduites ou détectées directement électriquement, le résultat de mesure est indiqué directement sur le dispositif d'affichage de l'ordinateur ou équivalent et/ou ledit résultat de mesure est imprimé en tant qu'enregistrement de mesure.
